# EUROPEAN PATENT APPLICATION

(11) **EP 2 998 702 A1**
(43) Date of publication of application: **23.03.2016**
(21) Application number: 14797672.4
(22) Date of filing: 18.04.2014
(51) Int. Cl.: G01C 19/00, H04M 1/00

(54) **OFFSET ESTIMATION DEVICE, METHOD, AND PROGRAM**

(30) Priority: 15.05.2013 JP 2013103274
(71) Applicant: Asahi Kasei Kabushiki Kaisha, Chiyoda-ku Tokyo 101-8101 (JP)
(72) Inventor: KOBAYASHI, Shiro, Chiyoda-ku, Tokyo 101-8101 (JP); KONDA, Masahiro, Chiyoda-ku, Tokyo 101-8101 (JP)
(74) Representative: Hoffmann Eitle
(86) International application number: PCT/JP2014/002208
(87) International publication number: WO 2014/185009

(57) **Abstract**

To accurately measure the offset of an angular velocity sensor mounted in a mobile device in a short time, provided is an offset estimation apparatus including an acquiring section that acquires an output signal from an angular velocity sensor mounted in a mobile device; a hold state judging section that judges a hold state of the mobile device; and an offset estimating section that estimates an offset of the output signal of the angular velocity sensor according to a judgment result of the hold state judging section. Also provided is a method and program. The offset estimation apparatus may include a parameter control section that controls an estimation parameter of the offset estimating section according to the judgment result of the hold state judging section.

## Description

### BACKGROUND

### 1. TECHNICAL FIELD

The present invention relates to an offset estimation apparatus, a method, and a computer readable medium.

### 2. RELATED ART

Conventionally, an angle sensor that comprehends the displacement amount (angle) of a rotating system or an angular velocity sensor that comprehends the displacement velocity (angular velocity) of a rotating system measures the offset of the output signal of the sensor in a state where the rotation of the rotating system is stopped, and performs an offset correction corresponding to this measured offset, as shown in

### Patent Documents 1 and 2, for example.

Patent Document 1: Japanese Patent Application Publication No. H9-152338
Patent Document 2: Japanese Patent Application Publication No. 2004-212382

For example, in a mobile device apparatus or the like where an angular velocity sensor is mounted, when performing the offset correction described above, the offset of the angular velocity sensor is measured after the mobile device apparatus has stopped moving. However, in a case where the mobile device apparatus is being held by a user, there is a long wait time until the mobile device apparatus stops moving, and therefore the offset measurement takes a long time. Furthermore, when the offset of the angular velocity sensor changes over time, it is difficult to periodically measure and correct the offset due to the extended time needed for the offset measurement, and the measurement accuracy of the angular velocity sensor decreases.

### SUMMARY

According to a first aspect of the present invention, provided is an offset estimation apparatus comprising an acquiring section that acquires an output signal from an angular velocity sensor mounted in a mobile device; a hold state judging section that judges a hold state of the mobile device; and an offset estimating section that estimates an offset of the output signal of the angular velocity sensor according to a judgment result of the hold state judging section.

The summary clause does not necessarily describe all necessary features of the embodiments of the present invention. The present invention may also be a subcombination of the features described above.

### BRIEF DESCRIPTION OF THE DRAWINGS

Fig. 1 shows an example of a mobile device 10 according to an embodiment of the present invention.
Fig. 2 shows an exemplary configuration of an offset estimation apparatus 100 according to the present embodiment.
Fig. 3 shows an operational flow of the offset estimation apparatus 100 according to the present embodiment.
Fig. 4 shows a first example of an output signal of an angular velocity sensor 112 corresponding to the x-axis direction of the mobile device 10 according to the present embodiment.
Fig. 5 shows a first example of an output signal of an angular velocity sensor 112 corresponding to the y-axis direction of the mobile device 10 according to the present embodiment.
Fig. 6 shows a first example of an output signal of an angular velocity sensor 112 corresponding to the z-axis direction of the mobile device 10 according to the present embodiment.
Fig. 7 shows a second example of an output signal of an angular velocity sensor 112 corresponding to the x-axis direction of the mobile device 10 according to the present embodiment.
Fig. 8 shows a second example of an output signal of an angular velocity sensor 112 corresponding to the y-axis direction of the mobile device 10 according to the present embodiment.
Fig. 9 shows a second example of an output signal of an angular velocity sensor 112 corresponding to the z-axis direction of the mobile device 10 according to the present embodiment.
Fig. 10 shows an example in which a prescribed time interval 410 is divided into segments 420 according to the present embodiment.
Fig. 11 shows an example in which the offset estimating section 160 according to the present embodiment determines that a plurality of segments 420 are suitable for the offset estimation.
Fig. 12 shows an example in which the offset estimating section 160 according to the present embodiment determines that a plurality of segments 420 are not suitable for the offset estimation.
Fig. 13 shows an example of a hardware configuration of a computer 1900 functioning as the offset estimation apparatus 100 according to the present embodiment.

### DESCRIPTION OF EXEMPLARY EMBODIMENTS

Hereinafter, some embodiments of the present invention will be described. The embodiments do not limit the invention according to the claims, and all the combinations of the features described in the embodiments are not necessarily essential to means provided by aspects of the invention.

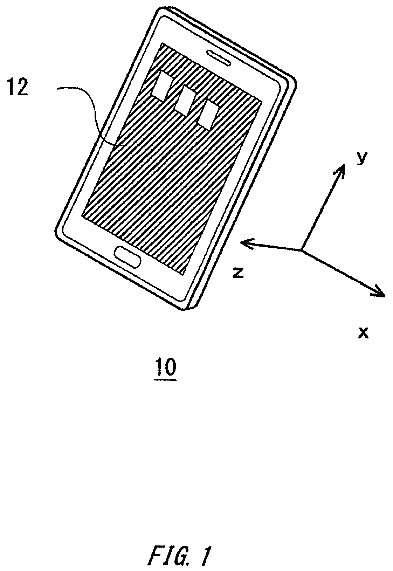

Fig. 1 shows an example of a mobile device 10 according to an embodiment of the present invention. The mobile device 10 has a plurality of sensors mounted therein, which detect the movement, hold state, position, and the like of this mobile device 10. Furthermore, the mobile device 10 performs a self-diagnostic or a calibration of each sensor to improve the detection sensitivity, for example.

The mobile device 10 has a communication function for connecting to the internet, an external device, or the like, and a data processing function for executing a program, for example. The mobile device 10 is a smartphone, a mobile phone, a tablet PC (Personal Computer), a mobile GPS device, a miniature PC, or the like, for example. The mobile device 10 includes a display section 12.

The display section 12 displays a screen for manipulating Internet web pages, electronic mail, maps, or document, audio, video, or image data, according to instructions from a user, for example. Furthermore, the display section 12 is a touch panel display into which the user instructions are input, for example, and the user instructions are input to a manipulation screen of software such as a browser by touch input from the user. Instead, the mobile device 10 may receive the user instructions through gesture input. As another example, the mobile device 10 may receive the user instructions through an input device such as a keyboard, mouse, and/or joystick.

The mobile device 10 according to the present embodiment is an example in which the plane parallel to the display surface of the display section 12 is the xy plane and the direction perpendicular to this display surface is the z axis. The mobile device 10 of the present embodiment is an example in which the display section 12 has a rectangular shape that is long in a vertical direction. Among the edges facing each other in the two types of rectangular shapes shown, the direction along the short edges (horizontal direction) is the x axis and the direction along the long edges (vertical direction) is the y axis.

In other words, in this example, when the display section 12 is viewed while the mobile device 10 is held in a hand of the user, the horizontal direction is substantially parallel to the x axis and the vertical direction that follows the standing direction of the user is substantially parallel to the yz plane. In this case, when the user uses the mobile device 10 as a telephone and places the mobile device 10 by an ear to converse, the progression direction in which the user is proceeding and the xy plane are substantially parallel, and the direction perpendicular to this progression direction is substantially parallel to the z axis. Furthermore, when the user is swinging their right arm back and forth while walking and holding the mobile device 10 in the right hand, the progression direction of the user and the swinging direction of the arm are substantially parallel to the xy plane, and the horizontal direction is substantially parallel to the z axis.

The mobile device 10 according to this embodiment has angular velocity sensors mounted therein and includes an offset estimation apparatus that estimates the offset of these angular velocity sensors. The present embodiment describes an example in which the mobile device 10 includes three angular velocity sensors that respectively have the x axis, y axis, and z axis, which are orthogonal to each other, as their rotational axis directions. The offset estimation apparatus estimates the offset of each of these angular velocity sensors according to the state in which the user is holding the mobile device 10.

For example, in a state where the user is holding the mobile device 10 in a hand, a state where the mobile device 10 is put into a pocket, or the like, the surrounding temperature of the angular velocity sensors may change due to the body heat of the user. Furthermore, there are cases where the surrounding temperature of the angular velocity sensors in the mobile device 10 changes due to the execution of a processing operation that places a load on the CPU, such as video playback. There are cases where an angular velocity sensor changes the offset value according to a change in environment, such as temperature change. Therefore, the offset estimation apparatus of the present embodiment estimates the offset periodically or at predetermined times, for example, to prevent a decrease in the accuracy of the angular velocity sensors caused by change over time of the offset.

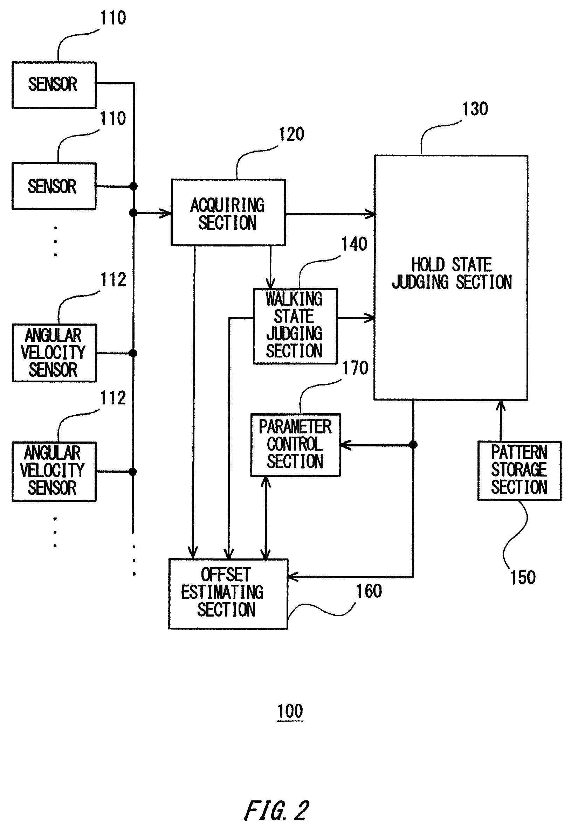

Fig. 2 shows an exemplary configuration of an offset estimation apparatus 100 according to the present embodiment. The offset estimation apparatus 100 judges the hold state of a mobile device 10 held by a user based on the output of sensors housed in the mobile device 10 and estimates the offset of the angular velocity sensors housed in the mobile device 10, according to the judgment result of the hold state. The offset estimation apparatus 100 includes an acquiring section 120 that acquires output signals from the sensors, a hold state judging section 130, a walking state judging section 140, a pattern storage section 150, an offset estimating section 160, and a parameter control section 170.

The sensors 110 are mounted in the mobile device 10. The sensors 110 include the angular velocity sensors 112. Furthermore, the sensors 110 may include acceleration sensors and/or geomagnetic sensors. The sensors 110 output detection results for each of acceleration, angular velocity, geomagnetism, and the like.

A plurality of the angular velocity sensors 112 are mounted according to the plurality of rotational axes of the mobile device 10, for example. The angular velocity sensors 112 include one of or a combination of an optical gyro sensor that uses the Sagnac effect, a vibrational gyro sensor that uses the Coriolis force, a fluid gyro sensor, and a mechanical gyro sensor that uses the law of conservation of angular momentum. The angular velocity sensors 112 may be devices formed by MEMS (Micro Electro Mechanical System) techniques.

The acquiring section 120 is connected to the plurality of sensors 110, and acquires the output signals from the sensors 110. The acquiring section 120 acquires output signals from the sensors 110 corresponding to the hold state of the mobile device 10, which is moving or still. For example, the acquiring section acquires the output signals from a plurality of angular velocity sensors corresponding to the plurality of rotational axes of the mobile device. When the user is holding the mobile device 10 and walking, for example, the acquiring section 120 acquires the output signals corresponding to the movement of the mobile device 10 that accompanies the walking of the user from the sensors 110. The acquiring section 120 transmits the acquired output signals to the hold state judging section 130, the walking state judging section 140, and the offset estimating section 160.

The hold state judging section 130 is connected to the acquiring section 120 and judges the hold state of the mobile device 10. The hold state judging section 130 judges the hold state of the mobile device 10 based on a change pattern of the output signals from the sensors 110, for example. In this case, the hold state judging section 130 compares a change pattern of the output signals that accompanies walking of the user stored in advance to the output signals from the sensor 110, to determine the hold state of the mobile device 10.

The walking state judging section 140 is connected to the acquiring section 120 and judges the walking state of the holder of the mobile device 10, according to the output signals of the sensors 110 received from the acquiring section 120. As an example, the walking state judging section 140 judges whether the user is in a walking state. The walking state judging section 140 is connected to the hold state judging section 130 and transmits the result of this determination to the hold state judging section 130 and the offset estimating section 160.

The pattern storage section 150 stores information indicating the characteristics of patterns of the output signals, for each of the plurality of hold states of the mobile device 10. For example, the pattern storage section 150 stores a reference characteristic amounts based on patterns of the output signals sampled in advance for each of a plurality of the hold states. Instead of or in addition to this, the pattern storage section 150 may store patterns of the output signals. Furthermore, instead of or in addition to this, the pattern storage section 150 may stores results obtained by analyzing the characteristics of the patterns of the output signals.

The offset estimating section 160 is connected to the acquiring section 120 and the hold state judging section 130, and estimates the offset of the output signal of an angular velocity sensor 112 according to the judgment result of the hold state judging section 130 and the output signal of the angular velocity sensor 112. The offset estimating section 160 estimates the offset of at least one angular velocity sensor 112, according to the judgment result of the hold state judging section 130 and the output signal of each angular velocity sensor 112. In other words, the offset estimating section 160 determines which angular velocity sensor 112 is to have its offset estimated, according to the judgment result of the hold state judging section 130.

The offset estimating section 160 is connected to the walking state judging section 140 and switches whether the offset of an angular velocity sensor 112 is estimated, according to the judgment result of the walking state judging section 140. For example, when the user is in the walking state, the offset estimating section 160 does not estimate the offsets of the angular velocity sensors 112.

Furthermore, the offset estimating section 160 estimates the offset of an angular velocity sensor 112 using the output signal of the angular velocity sensor 112 under conditions corresponding to an estimation parameter. Here, the offset estimating section 160 sets an estimation parameter for each of the plurality of angular velocity sensors 112.

The estimation parameter includes threshold values with a lower limit and an upper limit for the output fluctuation of the angular velocity sensor 112, for example. As another example, the estimation parameter may include a prescribed time interval or number of pieces of data used in one instance of the offset estimation, in the output signal of the angular velocity sensor 112. In this case, during a predetermined time interval, the offset estimating section 160 estimates the offset of the angular velocity sensor 112 on a condition that the output fluctuation of the angular velocity sensor 112 is within a predetermined range.

The parameter control section 170 is connected to the hold state judging section 130 and the offset estimating section 160, and controls the estimation parameter of the offset estimating section 160 according to the judgment result of the hold state judging section 130. The parameter control section 170 changes the estimation parameter for an angular velocity sensor 112 corresponding to the judgment result of the hold state judging section 130, from among the plurality of angular velocity sensors 112. The parameter control section 170 changes the estimation parameter of an angular velocity sensor 112 according to the hold state of the mobile device 10, for example.

The parameter control section 170 changes the estimation parameter when the estimation of the offset of an angular velocity sensor 112 has been performed by the offset estimating section 160. The parameter control section 170 changes the estimation parameter used in the offset estimation by the offset estimating section 160, for example.

When the offset estimation has not been performed even once, for example, the parameter control section 170 sets the estimation parameter in advance such that the offset estimation can be performed easily, thereby enabling faster estimation even though the estimation accuracy decreases by a small amount. Then, when the first offset estimation has been performed, the parameter control section 170 changes the estimation parameter such that the estimation accuracy is improved beyond the accuracy of the first estimation when the next estimation is performed.

Specifically, the parameter control section 170 can set the output fluctuation range of the angular velocity sensor 112 to be greater for the first estimation, for example, and set the output fluctuation range for the second and following estimations to be less than the output fluctuation range of the first estimation. This is merely an example, however, and a variety of techniques can be adopted depending on the intended use.

The offset estimation apparatus 100 of the present embodiment described above first judges the hold state of the mobile device 10 possessed by the user to be one hold state from among a plurality of predetermined hold state categories. For example, the hold state judging section 130 includes a state in which the user is holding the mobile device 10 in a hand while manipulating or viewing the mobile device 10, a state in which the mobile device 10 is held to the ear during a conversation, a state in which the mobile device 10 is held in a hand while the arm is swinging, a state in which the mobile device 10 is held in a pocket, and a state in which the mobile device 10 is held in a bag as the categories of the hold state of the mobile device 10. The offset estimation apparatus 100 estimates the offset of the angular velocity sensor 112 according to the hold state judged by the hold state judging section 130.

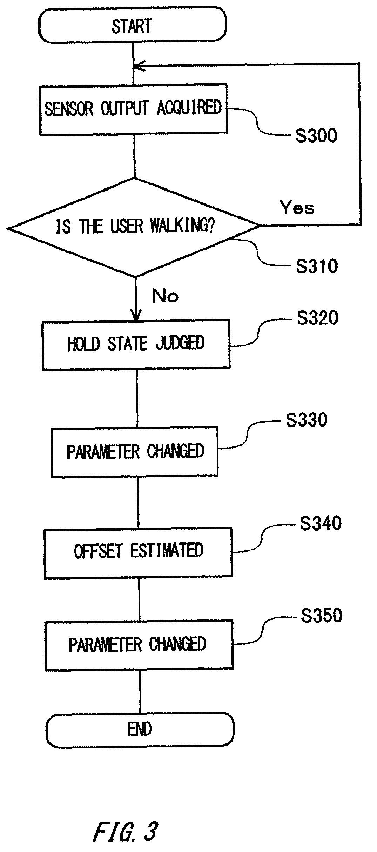

Fig. 3 shows an operational flow of the offset estimation apparatus 100 according to the present embodiment. The offset estimation apparatus 100 estimates the offset of an angular velocity sensors 112 mounted in the mobile device 10 possessed by the user, by performing the operational flow shown in Fig. 3.

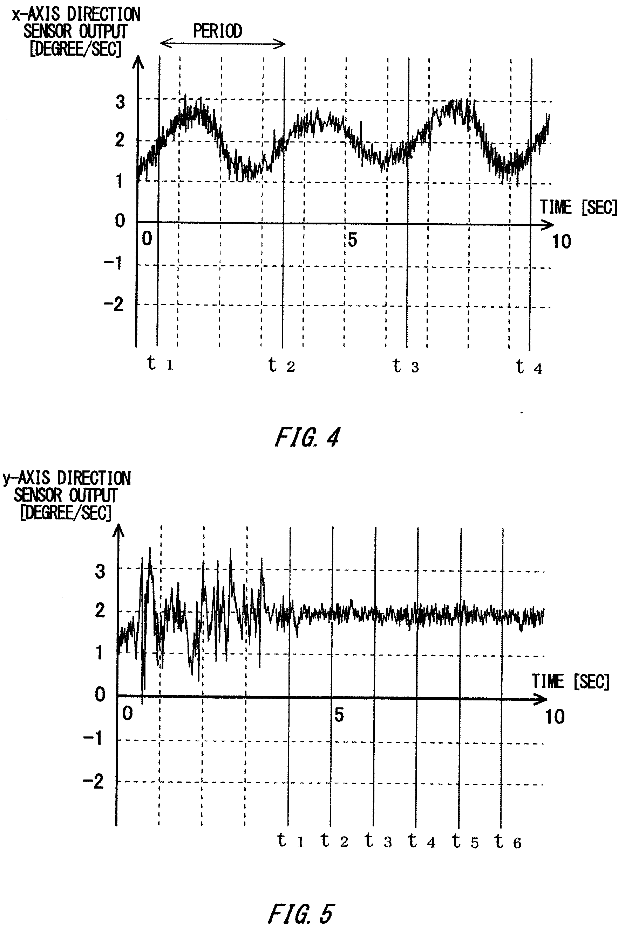

First, the acquiring section 120 acquires the output signals of the plurality of sensors 110 (S300). The present embodiment describes an example in which the sensors 110 include a total of six sensors including accelerations sensors that respectively detect acceleration in the x, y, and z axis directions that are orthogonal to each other and angular velocity sensors 112 that respectively detect the angular velocity in the x, y, and z axis directions. Figs. 4 to 9 show examples of the output signals of the angular velocity sensors 112 according to the present embodiment.

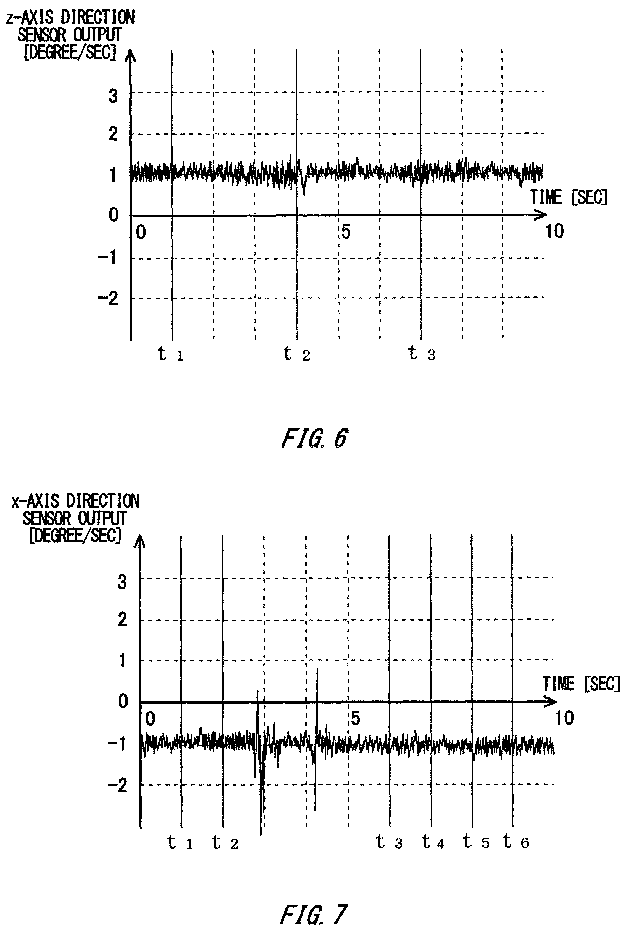

In Figs. 4 to 9, the horizontal axes indicate time and the vertical axes indicate the output intensity of each sensor. For example, Fig. 4 shows a first example of an output signal in the x-axis direction of an angular velocity sensor 112 according to the present embodiment. Similarly, Figs. 5 and 6 respectively show first examples of output signals in the y-axis direction and the z-axis direction of angular velocity sensors 112. Furthermore, Figs. 7, 8, and 9 respectively show second examples of output signals in the x-axis, y-axis, and z-axis directions of the angular velocity sensors 112. The acquiring section 120 acquires each of these output signals output by the plurality of sensors, and transmits the acquired output signals to the hold state judging section 130, the walking state judging section 140, and the offset estimating section 160.

Next, the walking state judging section 140 judges whether the user is walking (S310). For example, the walking state judging section 140 judges whether the user is walking according to whether the output signals from the acceleration sensors fluctuate periodically within a predetermined range. When the user is walking with a substantially constant velocity, acceleration in the progression direction of the user and acceleration in a direction orthogonal to the progression direction occur at substantially constant periods. In this case, acceleration occurs with a period and amplitude corresponding to the height, weight, leg length, gait, and walking velocity of the user, for example, and the acceleration sensors output an oscillation pattern corresponding to the walking of the user by detecting these types of acceleration.

The walking state judging section 140 judges whether the user is walking according to a characteristic of a pattern of an output signal, for example. In this case, the walking state judging section 140 is connected to the pattern storage section 150 and may compare a characteristic of a pattern read from the pattern storage section 150 to the characteristic of the pattern of the output signal. In this case, the pattern storage section 150 stores in advance a pattern of the output signal occurring when the user is actually walking.

If the walking state judging section 140 detects fluctuation with a substantially constant period such as described above and determines that the user is walking (S310: Yes), the walking state judging section 140 transmits the detection result to the hold state judging section 130 and the offset estimating section 160. The offset estimation apparatus 100 then proceeds to step S300 and returns to acquiring the output signals with the acquiring section 120. Specifically, until detecting the state in which the user is not walking, the offset estimation apparatus 100 repeats the acquisition of the output signals with the acquiring section 120. In this case, the hold state judging section 130 and the offset estimating section 160 need not respectively perform the hold state judgment operation and the offset estimation operation.

In this way, while the user is walking, when the offset is estimated from the output signal of the angular velocity sensor 112, the error increases according to the output fluctuation caused by the walking, and therefore the offset estimation apparatus 100 does not transition to the offset estimation operation. In other words, the offset estimating section 160 estimates the offset of an angular velocity sensor 112 according to the output of the angular velocity sensor 112 in the judgment result of the still state of the mobile device 10.

When the walking state judging section 140 does not detect such fluctuation with a substantially constant period (S310: No), the offset estimation apparatus 100 proceeds to step S320 and the hold state judging section 130 judges the hold state of the mobile device 10 (S320). Specifically, the hold state judging section 130 judges the hold state of the mobile device 10 on a condition that it has been determined that the user is not walking.

Instead of this, the hold state judging section 130 may judge the hold state of the mobile device 10 in parallel with the judgment operation of the walking state judging section 140. In this case, the hold state judging section 130 sequentially performs the judgment for a predetermined interval of the output signals received from the acquiring section 120. The hold state judging section 130 then transmits to the offset estimating section 160 the judgment result of the hold state at the timing at which the judgement result indicating that the walking state judging section 140 has judged the user to not be walking is received.

The hold state judging section 130 judges the hold state of the mobile device 10 based on the output signals of the sensors 110 acquired by the acquiring section 120 and the pattern signals stored in advance in the pattern storage section 150. For example, the pattern storage section 150 stores pattern signals in advance, which are output signals of the sensors 110 acquired by the acquiring section 120 in correspondence with hold states of the user or signals obtained by applying a predetermined computation to these output signals, in association with hold states. The hold state judging section 130 compares the output signals of the sensors 110 to the pattern signals stored in the pattern storage section 150, and provides a corresponding hold state as a judgment result according to which patterns match.

Instead, the hold state judging section 130 may judge the hold state of the mobile device 10 based on which of a plurality of reference characteristic amounts stored in the pattern storage section 150 the characteristic amounts obtained from the output signals correspond to. Specifically, the pattern storage section 150 stores a result obtained by performing a principal component analysis on an average value, variance, fluctuation amplitude, or period of the output signal corresponding to the hold state of the mobile device 10 as a reference characteristic amount, for example. In this case, the hold state judging section 130 compares the characteristic amount obtained by applying the predetermined computational process on an output signal to the reference characteristic amounts of the stored patterns and, in response to the characteristic amount matching the reference characteristic amount within a predetermined range, sets the corresponding hold state as the judgment result.

Instead, the hold state judging section 130 may judge the hold state of the mobile device 10 based on the relationship between two or more axial direction components among the plurality of axial direction components when the output signal of the sensor 110 accompanying the walking of the user is separated into the plurality of axial direction components.

As another example, in a case where the plurality of sensors 110 include a first sensor detecting a first physical amount and a second sensor detecting a second physical amount that is of a different type than the first physical amount, the hold state judging section 130 may judge the hold state of the mobile device 10 based on the relationship between at least one axial direction component of the output signal of the first sensor and at least one axial direction component of the output signal of the second sensor. In this way, by using a relationship based on a plurality of physical amounts, it is possible to improve the accuracy of the hold state judgment and more specifically judge the hold state.

Examples of the first sensor and the second sensor can include angular velocity sensors, acceleration sensors, geomagnetic sensors, and the like. As another example, the hold state judging section 130 judges the category of a hold state of the mobile device 10 based on change patterns of the plurality of axial direction components of the output signal. Here, the hold state judging section 130 judges the hold state of the mobile device 10 according to the waveform pattern in a predetermined interval of the output signal, for example.

The hold state judging section 130 may judge the hold state of the mobile device 10 based on the output signal of an angular velocity sensor 112 and the pattern signals stored in advance by the pattern storage section 150. As an example, the hold state judging section 130 receives first examples of output signals from three angular velocity sensors 112 shown in Figs. 4, 5, and 6, and judges the hold state of the mobile device 10. As another example, in a similar manner, the hold state judging section 130 receives second examples of output signals from three angular velocity sensors 112 shown in Figs. 7, 8, and 9, and judges the hold state of the mobile device 10.

Fig. 4 is a first example of an output signal of the angular velocity sensor 112 corresponding to the x-axis direction of the mobile device 10, and this output signal has periodicity. Fig. 5 is a first example of an output signal of the angular velocity sensor 112 corresponding to the y-axis direction of the mobile device 10, and this output signal has an increased noise component during the period from 0 seconds to 4 seconds. Fig. 6 is a first example of an output signal of the angular velocity sensor 112 corresponding to the z-axis direction of the mobile device 10, and this output signal has a substantially constant noise component.

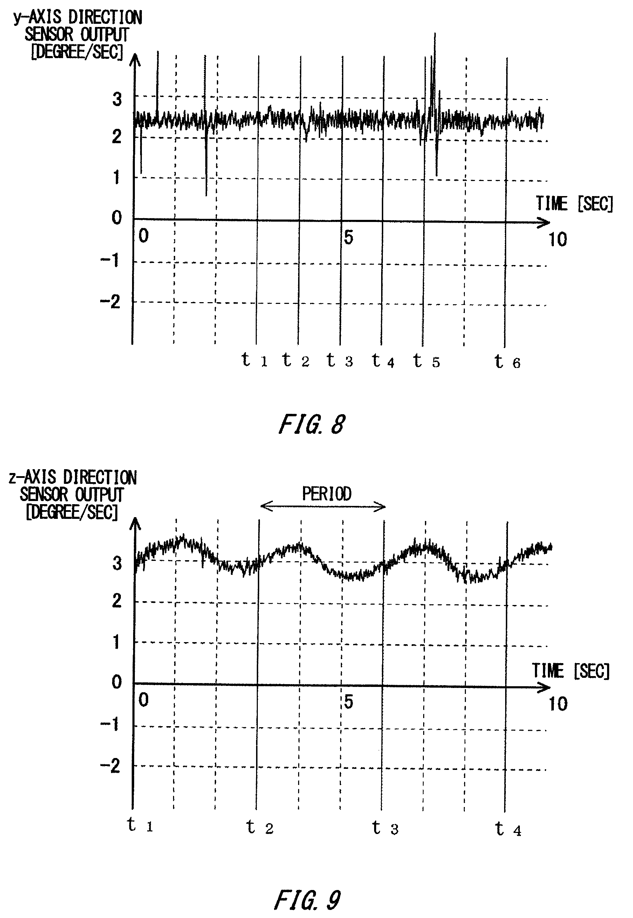

Fig. 7 is a second example of an output signal of the angular velocity sensor 112 corresponding to the x-axis direction of the mobile device 10, and this output signal has an increased noise component during the period from 2 seconds to 6 seconds. Fig. 8 is a second example of an output signal of the angular velocity sensor 112 corresponding to the y-axis direction of the mobile device 10, and this output signal has an increased noise component during the period from 0 seconds to 2 seconds and the period from 7 seconds to 9 seconds. Fig. 9 is a second example of an output signal of the angular velocity sensor 112 corresponding to the z-axis direction of the mobile device 10, and this output signal has periodicity.

The hold state judging section 130 extracts from these output signals of the first example a characteristic of "the x-axis direction has periodicity, the y-axis direction has a sudden noise increase, and the z-axis direction has a substantially constant noise component," for example. The hold state judging section 130 extracts information indicating whether there is a temporary increase in the noise component or whether there is a substantially constant noise component by judging whether the noise component fluctuates in a predetermined range, for example. Furthermore, the hold state judging section 130 may extract information indicating whether there is a characteristic of periodicity according to the result of processing such as a Fourier transform. The hold state judging section 130 performs matching between the extracted characteristics and characteristic patterns stored in the pattern storage section 150.

For example, when the user is standing still and holding the mobile device 10 in a hand to view the display section 12, the horizontal direction (x-axis direction) reflects the unconscious body movement of the user and has periodic vibration superimposed on the output signal. Furthermore, the vertical direction (y-axis direction) reflects the sudden hand or body movement of the user and has noise that temporarily increases superimposed on the output signal. The direction in which the face of the user is facing (z-axis direction) reflects the user viewing the display section 12 and exhibits a substantially constant noise component without shaking in the output signal.

When the user is using the mobile device 10 as a telephone and holds the mobile device 10 up to an ear to have a conversation, the mobile device 10 is usually held in place near the ear, and so the shaking on each axis is reduced. The x-axis direction and y-axis direction of the mobile device 10 reflect the sudden hand or body movement of the user and have noise components that temporarily increase superimposed thereon. The direction facing an ear of the user (z-axis direction) reflects the unconscious body movement of the user and exhibits periodic vibration in the output signal.

Accordingly, the pattern storage section 150 stores the characteristic pattern of "the x-axis direction has periodicity, the y-axis direction has a sudden noise increase, and the z-axis direction has a substantially constant noise component" in advance in association with "a state in which the user is holding the mobile device 10 and viewing the display section 12." Furthermore, the pattern storage section 150 stores the characteristic pattern of "the x-axis direction and the y-axis direction have a sudden noise increase, and the z-axis direction has periodicity" in advance in association with "a state in which the user is holding the mobile device 10 up to an ear and having a conversation."

In this way, the hold state judging section 130 can judge the hold state of the mobile device 10 by matching the extracted characteristics and the characteristics stored in advance in the pattern storage section 150. The hold state judging section 130 transmits the judged hold state to the parameter control section 170 and the offset estimating section 160.

Next, the parameter control section 170 changes the estimation parameters of the angular velocity sensors 112, according to the hold state of the mobile device 10 (S330). As described above, the output signals from the angular velocity sensors 112 that accompany the hold state of the mobile device 10 of the user differ significantly for each hold state. Therefore the parameter control section 170 changes the estimation parameters of the offset estimating section 160 to be estimation parameters according to the hold state for each axis, for example.

For example, the parameter control section 170 causes a prescribed time interval used for one instance of the offset estimation of the angular velocity sensor 112 corresponding to the x-axis direction of the mobile device 10 to substantially match the period of the output signal of this angular velocity sensor 112, in response to receiving a judgment result of "a state in which the user is holding the mobile device 10 and viewing the display section 12." The parameter control section 170 determines that the output signal of the angular velocity sensor 112 corresponding to the x-axis direction has periodicity, based on the judgment result of the hold state, and can therefore change the estimation parameter to be a time interval substantially the same as this period.

The parameter control section 170 sets the prescribed time interval used for one instance of the offset estimation of the angular velocity sensor 112 corresponding to the y-axis direction of the mobile device 10 to be relatively shorter than the time interval of the angular velocity sensor 112 corresponding to the z-axis direction. The parameter control section 170 determines that the output signal of the angular velocity sensor 112 corresponding to the y-axis direction has noise that suddenly increases, based on the judgment result of the hold state, and can therefore change the estimation parameter in a manner to shorten the time interval used for the offset estimation.

The parameter control section 170 sets the prescribed time interval used for one instance of the offset estimation of the angular velocity sensor 112 corresponding to the z-axis direction of the mobile device 10 to be relatively longer than the time interval of the angular velocity sensor 112 corresponding to the y-axis direction. The parameter control section 170 determines that the output signal of the angular velocity sensor 112 corresponding to the z-axis direction has substantially constant noise, based on the judgment result of the hold state, and can therefore change the estimation parameter in a manner to lengthen the time interval used for the offset estimation.

When the offset estimating section 160 continuously estimates the offset of an angular velocity sensor 112, the parameter control section 170 may control the estimation parameter according to the previous and current judgment results of the hold state judging section 130. For example, when the offset estimating section 160 has continuously judged the same hold state, the parameter control section 170 maintains the previous estimation parameter without change and then changes the estimation parameter when the judgment result of the hold state judging section 130 changes.

Next, the offset estimating section 160 estimates the offsets according to the output signals of the angular velocity sensors 112 and the judgment result of the hold state judging section 130 (S340). For example, the offset estimating section 160 estimates the offset of the angular velocity sensor 112 corresponding to the z-axis direction in response to receiving the judgment result of "a state in which the user is holding the mobile device 10 and viewing the display section 12."

Here, the offset estimating section 160 uses the time interval used for the offset estimation that has been changed by the parameter control section 170, for example, to output the average values of the output signals of the angular velocity sensors 112 acquired in this time interval as the offset estimation result. More specifically, when the output signal of the angular velocity sensor 112 corresponding to the z-axis direction shown in Fig. 6 is acquired, the offset estimating section 160 outputs the average value of the output signal during the time intervals from t1 to t2 and/or from t2 to t3, etc. In the example shown in Fig. 6, the offset of the angular velocity sensor 112 is estimated at an interval of approximately 3 seconds, and the estimation result is approximately 1 [°/sec].

The offset estimating section 160 may estimate the offset when the output signal of an angular velocity sensor 112 is within a threshold value range with a lower limit and an upper limit for output fluctuation determined by the parameter control section 170. For example, the offset estimating section 160 may calculate an average value, maximum value, and minimum value for each time interval used for the offset estimation, and output the average value as the offset in response to the difference between the average value and the maximum value and the difference between the average value and the minimum value each being in the threshold value range bounded by the upper limit and the lower limit.

The parameter control section 170 sets threshold values corresponding to the output fluctuation occurring when the angular velocity sensor 112 outputs a substantially constant noise component, as the estimation parameter at step S330. In this case, the parameter control section 170 may measure in advance the output fluctuation occurring when the angular velocity sensor 112 outputs a substantially constant noise component and set threshold values corresponding to the measurement results, or may instead set threshold values calculated from the design specifications of the angular velocity sensor 112.

In this way, even when the mobile device 10 is being held by the user, the offset estimating section 160 can select the angular velocity sensor 112 that outputs a substantially constant noise component according to the hold state and estimate the offset. In other words, even when the mobile device 10 is not secured in a still state, the offset estimating section 160 can estimate the offset for which the effect of the fluctuation of noise caused by movement of the user or the like has been reduced.

The offset estimating section 160 may estimate the offset of the angular velocity sensor 112 corresponding to the x-axis direction in response to receiving the judgment result of "a state in which the user is holding the mobile device 10 and viewing the display section 12." In this case, the offset estimating section 160 outputs, as the offset estimation result, the average value of the output signal of the angular velocity sensor 112 acquired during the time interval that substantially matches the period of the output signal of this angular velocity sensor 112.

More specifically, when the output signal of the angular velocity sensor 112 corresponding to the x-axis direction shown in Fig. 4 is acquired, the offset estimating section 160 outputs the average value of the output signal during the time intervals from t1 to t2, from t2 to t3, and /or from t3 to t4, etc. In the example shown in Fig. 4, the offset of the angular velocity sensor 112 is estimated at an interval of approximately 3 seconds, and the estimation result is approximately 2 [°/sec].

The offset estimating section 160 may estimate the offset when the output signal of an angular velocity sensor 112 is within a threshold value range with a lower limit and an upper limit for output fluctuation determined by the parameter control section 170. Here, the parameter control section 170 sets threshold values corresponding to the output signal that has periodic fluctuation due to the unconscious movement of the user, as the estimation parameter at step S330.

The parameter control section 170 sets the range of threshold values for the x-axis direction to be larger than the range of threshold values determined for the z-axis direction by an amount corresponding to the periodic fluctuation, and to be smaller than the range of the sudden fluctuation. In this case, the parameter control section 170 may measure in advance the sudden output fluctuation and the periodic output fluctuation corresponding to the movement of the user of the angular velocity sensor 112, and set the threshold values corresponding to the measurement results.

In this way, even when the mobile device 10 is being held by the user, the offset estimating section 160 can select the angular velocity sensor 112 that outputs a signal with periodic fluctuation according to the hold state and estimate the offset using this period. Therefore, the offset estimating section 160 can estimate the offset while reducing the periodic fluctuation caused by movement of the user, for example.

The offset estimating section 160 may estimate the offset of the angular velocity sensor 112 corresponding to the y-axis direction in response to receiving the judgment result of "a state in which the user is holding the mobile device 10 and viewing the display section 12." In this case, the offset estimating section 160 estimates the offset with a time interval that is shorter than the time interval used for the angular velocity sensor 112 outputting a substantially constant noise component, according to the estimation parameter.

The offset estimating section 160 estimates the offset when the output signal of the angular velocity sensor 112 is within a threshold value range with a lower limit and an upper limit for output fluctuation determined by the parameter control section 170. Here, the parameter control section 170 sets threshold values corresponding to the sudden output fluctuation of the angular velocity sensor 112 due to the movement of the user, as the estimation parameter at step S330.

The parameter control section 170 sets the range of threshold values for the y-axis direction to be smaller than the range of the sudden fluctuation. In this case, the parameter control section 170 may measure in advance the sudden output fluctuation corresponding to the movement of the user of the angular velocity sensor 112, and set the threshold values corresponding to the measurement results.

Specifically, when the output signal of the angular velocity sensor 112 corresponding to the y-axis direction shown in Fig. 5 is acquired, the time interval from 0 to t1 is greater than the sudden output fluctuation, and therefore the offset estimating section 160 does not perform the offset estimation. The offset estimating section 160 outputs the average value of the output signal during the time intervals from t1 to t2, t2 to t3, etc. In the example shown in Fig. 5, the offset of the angular velocity sensor 112 is estimated at an interval of approximately 1 second, and the estimation result is approximately 2 [°/sec].

In this way, even when the mobile device 10 is being held by the user, the offset estimating section 160 can select the angular velocity sensor 112 that is prone to sudden output fluctuation according to the hold state and estimate the offset using the output signal occurring when the sudden output fluctuation is not present. Furthermore, since the time interval used for the estimation is shortened, the offset estimating section 160 can prevent an increase in the estimation processing time and can also prevent a case where the offset estimation cannot be performed due to the sudden output fluctuation. Therefore, the offset estimating section 160 can estimate the offset while reducing the sudden fluctuation caused by movement of the user, for example.

The offset estimation apparatus 100 according to the present embodiment described above can estimate the offset of an angular velocity sensor 112 according to the first example of the output signal of the angular velocity sensor 112. In a similar manner, the offset estimation apparatus 100 can estimate the offset of an angular velocity sensor 112 according to the second example of the output signal of the angular velocity sensor 112. Specifically, even when the user is holding the mobile device 10, the offset estimation apparatus 100 can estimate the offset of an angular velocity sensor 112 according to the hold state of the mobile device 10.

Next, the parameter control section 170 changes the estimation parameter (S350). Specifically, when the offset of an angular velocity sensor 112 has been estimated by the offset estimating section 160, the parameter control section 170 controls the estimation parameter. For example, immediately after the offset estimating section 160 has estimated the offset, the parameter control section 170 causes the time interval used for the estimation to be longer. Furthermore, the parameter control section 170 narrows the range of threshold values for the upper limit and lower limit of the output fluctuation used for the estimation. Specifically, the parameter control section 170 sets stricter conditions for the following offset estimations performed by the offset estimating section 160.

In other words, when the output of an angular velocity sensor 112 is more stable and experiences less fluctuation than in an offset estimation that has already been performed and a longer time is used for the estimation time, the offset estimating section 160 performs the next offset estimation. Therefore, after the offset estimating section 160 performs the offset estimation once, when the output fluctuation of the angular velocity sensor 112 changes to become less stable, the performance of the following offset estimations is stopped, or the offset estimation can be performed only when the conditions have changed such that output fluctuation of the angular velocity sensor 112 is more stable and the offset can be estimated accurately.

In this case, after the offset estimating section 160 has estimated the offset, if the next offset estimation has not yet been performed and a time has passed that is longer than a predetermined time, the parameter control section 170 may relax the conditions for performing the offset estimation. The offset of the angular velocity sensor 112 changes over time, and therefore even if the offset is estimated accurately once, there are cases where the estimated value deviates from the actual offset value as time passes.

Therefore, when a predetermined time has passed since an offset estimation, the parameter control section 170 relaxes the conditions for performing the offset estimation and causes the offset estimating section 160 to perform the offset estimation. In this case as well, after the offset estimating section 160 has performed the offset estimation, the parameter control section 170 may cause the conditions for performing the following offset estimations to be stricter. In this way, even when the offset of an angular velocity sensor 112 changes over time, the offset estimating section 160 can prevent a decrease in accuracy by continuing to perform the offset estimation.

In addition to this, the parameter control section 170 may determine an evaluation value corresponding to the estimation parameter, and reduce the evaluation value according to the passage of time. Furthermore, the parameter control section 170 may determine the evaluation value according to the judgment result of the hold state judging section 130.

The parameter control section 170 decreases the evaluation values of the estimation parameters for estimating the offsets of the angular velocity sensors 112 corresponding to each of the z-axis direction, the x-axis direction, and the y-axis direction, in the stated order, according to the hold state judging section 130 judging there to be "a state in which the user is holding the mobile device 10 and viewing the display section 12." In other words, the parameter control section 170 sets greater evaluation values for states in which the fluctuation of the output signal of the angular velocity sensor 112 is more stable.

The parameter control section 170 sets the evaluation value of the estimation parameter in the z-axis direction to be greater than the evaluation values in the x-axis direction and the y-axis direction, in response to the hold state judging section 130 judging there to be "a state in which the user is holding the mobile device 10 up to an ear and having a conversation," for example. Here, the parameter control section 170 causes the evaluation value in the z-axis direction to be substantially equal to the evaluation value in the x-axis direction occurring in a case where the hold state judging section 130 judges there to be "a state in which the user is holding the mobile device 10 and viewing the display section 12." Similarly, the parameter control section 170 causes the evaluation values in the x-axis direction and the y-axis direction to be substantially equal to the evaluation value in the y-axis direction occurring in a case where there is judged to be "a state in which the user is holding the mobile device 10 and viewing the display section 12."

Specifically, among the characteristics of the signal components of an angular velocity sensor 112, the parameter control section 170 may set sequentially smaller evaluation values in the order of "a case where there is a substantially constant noise component," "a case where there is a noise component with periodicity," and "a case where there is a sudden increase in noise." During a period in which the offset estimating section 160 is not performing the offset estimation, the parameter control section 170 decreases each evaluation value by a prescribed value at every predetermined time. When the offset estimating section 160 has not performed the offset estimation, even when a hold state judgment result of the hold state judging section 130 is received, the parameter control section 170 does not perform an update to the evaluation value corresponding to this hold state.

The offset estimating section 160 estimates the offset on a condition that the evaluation value corresponding to the estimation parameter is increased by the parameter control section 170. For example, when the offset estimating section 160 has estimated the offset in response to the hold state judging section 130 judging there to be "a state in which the user is holding the mobile device 10 and viewing the display section 12," the parameter control section 170 determines the evaluation value of the estimation parameter according to the hold state. Next, during the period when the offset estimating section 160 has stopped estimating the offset, the parameter control section 170 decreases the evaluation value of each estimation parameter by a predetermined value at every predetermined time.

When the output signals of the angular velocity sensors 112 have become stable and the hold state judging section 130 judges there to be "a state in which the user is holding the mobile device 10 and viewing the display section 12," even though the judgment result is the same as the previous judgment result, the evaluation values of the estimation parameters decrease over time, and therefore the parameter control section 170 increases these evaluation values when the evaluation values are updated. Accordingly, the offset estimating section 160 performs the offset estimation, and the parameter control section 170 updates these evaluation values.

When the output signals of the angular velocity sensors 112 have become stable and the hold state judging section 130 judges there to be "a state in which the user is holding the mobile device 10 up to an ear and having a conversation," the judgment result is different from the previous judgment result. In this case, the evaluation values of the estimation parameters are decreasing over time, and even when the parameter control section 170 updates the evaluation values, whether the evaluation values are increased depends on the time that has passed and the judged hold state. Specifically, the offset estimating section 160 performs the offset estimation in a case where the evaluation value of an estimation parameter of the offset estimated previously decreases over time more than the current evaluation value.

In this way, even when the offset fluctuates over time and reliability decreases after the offset of the angular velocity sensor 112 has been estimated, the offset estimating section 160 can determine this decrease in reliability according to the evaluation value of the estimation parameter. Accordingly, when it is possible to perform an offset estimation with higher reliability, the offset estimating section 160 can estimate this offset and prevent the decrease in reliability of the estimation result even when this offset fluctuates.

Furthermore, in a case where the user changes the hold state of the mobile device 10 such that an angular velocity sensor 112 whose output signal was stable becomes unstable and the time in which the reliability would decrease has not yet passed from the previous offset estimation, the offset estimating section 160 does not perform the offset estimation since the evaluation value of the estimation parameter has not increased. In other words, the offset estimating section 160 can determine that an offset estimation has low reliability from the evaluation value of the estimation parameter, and can maintain an estimation result with high reliability and prevent an update to an estimation result with low reliability. Here, the offset estimating section 160 may compare the evaluation values for each rotational axis of the mobile device 10, and determine whether the offset estimation is to be performed for each rotational axis.

With the offset estimation apparatus 100 according to the present embodiment described above, it is possible to estimate the offset of the angular velocity sensors 112 mounted in the mobile device 10 while controlling the estimation parameters such as the time used for the estimation and the threshold values for the lower limit and upper limit of the output fluctuation, according to the hold state of the mobile device 10. In this way, even when the mobile device 10 is not held still, the offset estimation apparatus 100 can reduce the effect of the output fluctuation of the angular velocity sensors 112 and estimate a more accurate offset in a short time. Accordingly, even when the offset of an angular velocity sensor 112 changes over time, the offset estimation apparatus 100 can estimate the offset periodically and prevent a decrease in the measurement accuracy of this angular velocity sensor 112.

The offset estimation apparatus 100 according to the present embodiment described above is an example in which the offset estimation operation is not transitioned to while the user is walking. In addition to this, even when the user is walking, the offset estimation apparatus 100 may transition to the offset estimation operation if of the output fluctuation of the angular velocity sensors 112 is within a predetermined range of fluctuation. For example, if the walking movement is to a degree that does not affect the offset estimation of the offset estimation apparatus 100, e.g. if the user is walking slowly, the offset estimation apparatus 100 may perform the offset estimation operation during the walking movement of the user.

As an example, when the output fluctuation of an angular velocity sensor 112 is within the predetermined range of fluctuation, the walking state judging section 140 judges that the user is not in the walking state even when a walking state of the user is detected. In this way, the offset estimation apparatus 100 can transition to the offset estimation operation and prevent the decrease in the measurement accuracy of the angular velocity sensor by increasing the opportunities for performing the offset estimation operation.

The offset estimating section 160 according to the present embodiment described above is an example in which the offset estimation is performed during a prescribed time interval in which the output signal of an angular velocity sensor 112 has output fluctuation that is within a range of threshold values for a lower limit and an upper limit of the output fluctuation determined by the parameter control section 170. In addition to this, the offset estimating section 160 may estimate the offset based on data of the output signal of an angular velocity sensor 112 in a plurality of segments obtained by dividing the prescribed time interval into segments.

For example, the offset estimating section 160 divides the prescribed time interval into a plurality of segments, calculates a maximum value and a minimum value of the data of the output signal of the angular velocity sensor 112 in each of the plurality of segments, and sets offset estimation candidates that are the pieces of data of the segments in which the difference between the maximum value and the minimum value is less than a predetermined threshold value, from among the plurality of segments. Instead of or in addition to this, the offset estimating section 160 may calculate a variance value of the data of the output signal of the angular velocity sensor in each of the plurality of segments, and set offset estimation candidates that are the pieces of data in the segments in which the variance value is less than a predetermined threshold value, from among the plurality of segments.

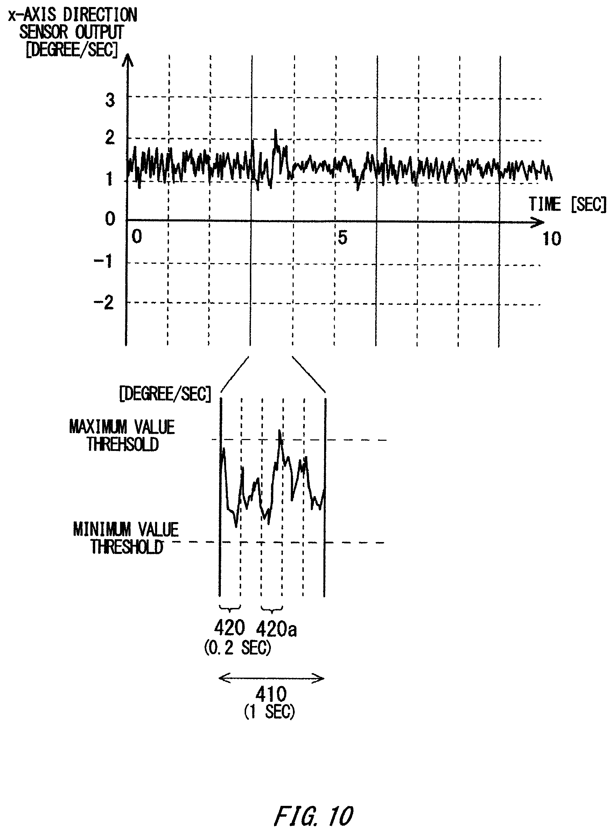

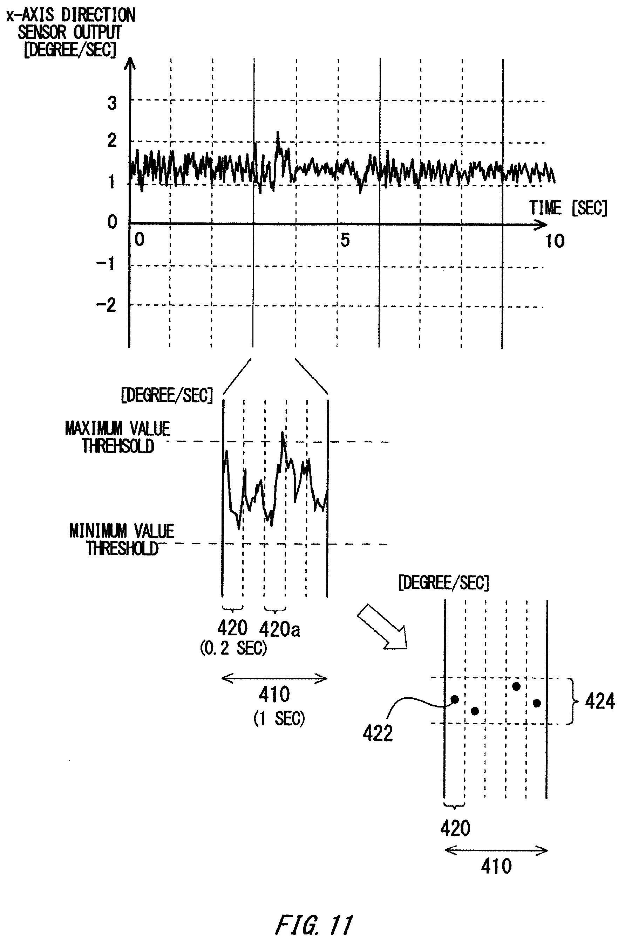

When the number of segments that include pieces of data set as offset estimation candidates in the prescribed time interval is greater than or equal to a predetermined number, the offset estimating section 160 may estimate the offset from the pieces of data that are offset estimation candidates. In this case, the parameter control section 170 may change the predetermined number according to the judgment result of the hold state judging section 130. Furthermore, in this case, the offset estimating section 160 outputs the average value of the pieces of data set as offset estimation candidates in the prescribed time interval as the offset, for example. This operation of the offset estimating section 160 is described below using Figs. 10 and 11.

Fig. 10 shows an example in which a prescribed time interval 410 is divided into segments 420 according to the present embodiment. In this way, the offset estimating section 160 divides the time interval 410 used for the offset estimation into a plurality of segments 420 that are very short times, and performs a predetermined computation process on the output signal of the angular velocity sensor 112 acquired in each of these segments 420.

The offset estimating section 160 calculates the average value, maximum value, and minimum value in each segment 420, and judges that a segment 420 is suitable for use in the offset estimation in response to the difference between the maximum value and the minimum value in this segment 420 being within a prescribed threshold value range. Furthermore, if the number of segments 420 suitable for offset estimation in the time interval 410 is greater than or equal to a predetermined number, the offset estimating section 160 may output the average value of the output signal of the angular velocity sensor 112 in the segments suitable for the offset estimation as the offset. In other words, the offset estimating section 160 may throw out the pieces of data that are not suitable for offset estimation without using these pieces of data in the offset estimation.

Instead of or in addition to this, the offset estimating section 160 may calculate the variance value of the output signal of the angular velocity sensor 112 acquired in a segment 420 and judge whether this segment 420 is suitable for the offset estimation according to whether the variance value is within a predetermined range of threshold values. Here, there are cases where the effect of noise fluctuation caused by movement of the user or the like is included even among the segments 420 resulting from dividing the time interval 410. Therefore, the offset estimating section 160 can prevent worsening of the offset estimation accuracy by not using the output signal of the angular velocity sensor 112 in segments that include such an effect of noise fluctuation for the offset estimation.

The threshold value for the number of segments 420 suitable for the offset estimation in the time interval 410 may be changed by the parameter control section 170 according to the judgment result of the hold state judging section 130.

Here, a specific example of the offset estimation of the x-axis output signal of an angular velocity sensor 112 is described. As an example, the output signal of the angular velocity sensor 112 is updated with a sampling interval of 100 Hz, and the offset estimating section 160 divides a time interval 410 of 1 second used for the offset estimation into five segments 420 and performs the offset estimation.

Since the angular velocity sensor 112 performs the sampling at 100 Hz in the time interval 410 that is 1 second, there are one-hundred pieces of sampling data in this time interval 410. The pieces of data of the angular velocity sensor in a single segment 420 have a time interval of 200 ms, which results in twenty pieces of data.

The offset estimating section 160 calculates the maximum value and the minimum value from the twenty pieces of data of the angular velocity sensor 112, and determines that the twenty pieces of data are suitable for the offset estimation if the difference between the maximum value and the minimum value is within a predetermined range of threshold values. If the difference between the maximum value and the minimum value is not within a predetermined range of threshold values, the offset estimating section 160 determines that the twenty pieces of data are not suitable for the offset estimation, and does not use these twenty pieces of data in the offset estimation.

For each of the five segments 420, the offset estimating section 160 determines whether the segment is suitable for the offset estimation. Fig. 10 shows an example in which four segments 420 have been determined to be suitable for the offset estimation. Specifically, Fig. 10 shows an example in which the offset estimating section 160 has determined that the maximum value of the output data of the angular velocity sensor 112 in the segment 420a exceeds the threshold value, and that the segment 420a is therefore not suitable for the offset estimation.

Here, an example is described in which the offset estimating section 160 further sets a threshold value of 3 for determining whether the number of segments 420 is greater than or equal to the predetermined number. In this case, the offset estimating section 160 determines that four segments 420 are suitable for the offset estimation and that this exceeds the threshold value for the number of segments, and therefore calculates the offset to be the average value of the output data of the angular velocity sensor 112 over four segments 420, i.e. eighty pieces of output data of the angular velocity sensor 112 over a total of 800 msec.

Fig. 10 shows an example in which the offset estimating section 160 determines whether each segment 420 is suitable for the offset determination based on the maximum value and the minimum value of the output data of the angular velocity sensor 112 within each segment 420. Instead of or in addition to this, the offset estimating section 160 may calculate the average value of the output data of the angular velocity sensor 112 for each segment 420 and determine whether each segment 420 is suitable for the offset information based on these average values.

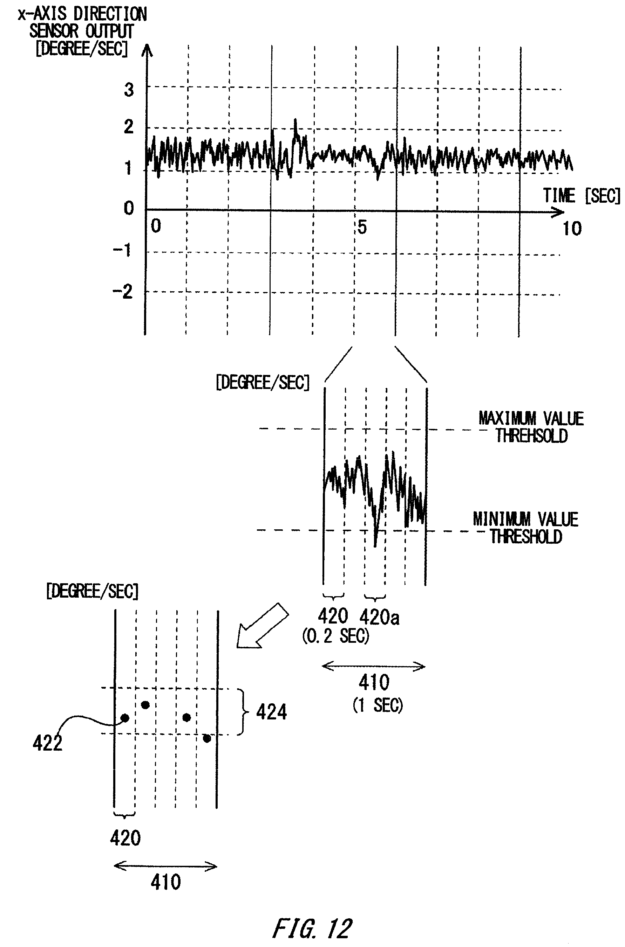

Fig. 11 shows an example in which the offset estimating section 160 according to the present embodiment determines that a plurality of segments 420 are suitable for the offset estimation. Fig. 12 shows an example in which the offset estimating section 160 according to the present embodiment determines that a plurality of segments 420 are not suitable for the offset estimation. The offset estimating section 160 calculates the maximum value and the minimum value from among four average values 422 calculated respectively for four segments 420, and determines whether these four segments 420 are suitable for the offset estimation according to whether the difference between the maximum value and the minimum value is within a predetermined range of threshold values 424.

In the example of Fig. 11, the difference between the maximum value and the minimum value among the four average values 422 corresponding to the four segments 420 is within the predetermined range of threshold values 424, and therefore the offset estimating section 160 uses the output data of the angular velocity sensor 112 in these four segments 420 in the offset estimation. In the example of Fig. 12, the difference between the maximum value and the minimum value among the four average values 422 is not within the predetermined range of threshold values 424, and therefore the offset estimating section 160 determines that these four segments 420 are not suitable for the offset estimation and does not use the output data of the angular velocity sensor 112 in these four segments 420 in the offset estimation. In this way, the offset estimating section 160 determines whether data is suitable for the offset estimation based on the maximum value, the minimum value, and the average value of the output data of the angular velocity sensor 112, and can therefore remove the effect of fluctuation caused by noise or the like and prevent worsening of the offset estimation accuracy.

In a case where there is also an offset that has been estimated in the past, the offset estimating section 160 may determine the offset at the current time based on this past offset and the offset estimated at the current time. For example, in a case where there are offsets that have been estimated before a certain offset, the offset estimating section 160 outputs the certain offset if the absolute value of the difference between the certain offset and the average value of the offsets estimated in the past is less than a predetermined threshold value. Furthermore, if the absolute value of the difference between the certain offset and the average value of the offsets estimated in the past is greater than a predetermined threshold value, the offset estimating section 160 does not output the certain offset. In this case, the offset estimating section 160 may continue using the offset estimated immediately before the estimation of the certain offset.

In a case where there are offsets measured before the certain offset, the offset estimating section 160 may determine whether to output the certain offset based on the variance of the offsets measured in the past and the variance of the certain offset. For example, the variance of the output data of the angular velocity sensor 112 used in the estimation of the certain offset is used as the variance of the certain offset. In this way, when the estimated offset is a value that suddenly significantly differs from the past offset estimation values, the offset estimating section 160 determines this offset to be caused by some kind of noise and/or error, and does not adopt this offset as the actual offset. Therefore, the offset estimating section 160 can remove the effect of fluctuation caused by noise or the like, and prevent worsening of the offset estimation accuracy.

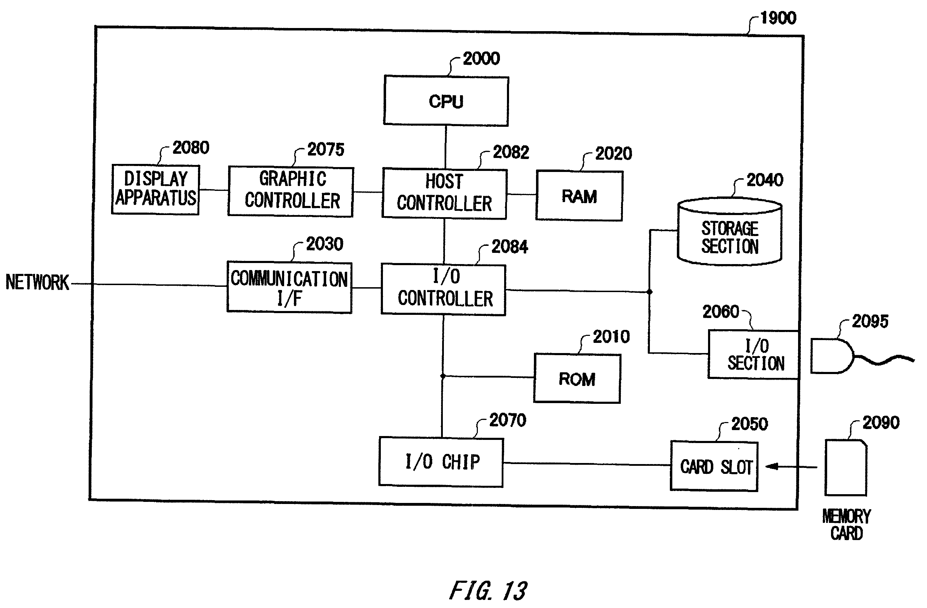

Fig. 13 shows an example of a hardware configuration of a computer 1900 functioning as the offset estimation apparatus 100 according to the present embodiment. The computer 1900 according to the present embodiment is mounted in the mobile device 10, for example. Instead, the computer 1900 may be provided outside the mobile device 10, receive output from a sensor of the mobile device 10, and transmit an offset estimation result or the like to the mobile device 10. In this case, the computer 1900 may communicate wirelessly with the mobile device 10, for example.

The computer 1900 is provided with a CPU peripheral including a CPU 2000, a RAM 2020, a graphic controller 2075, and a display apparatus 2080, all of which are connected to each other by a host controller 2082; a communication interface 2030, a storage section 2040, and an input/output section 2060, all of which are connected to the host controller 2082 by an input/output controller 2084; a ROM 2010; a card slot 2050; and an input/output chip 2070.

The host controller 2082 is connected to the RAM 2020 and is also connected to the CPU 2000 and graphic controller 2075 accessing the RAM 2020 at a high transfer rate. The CPU 2000 operates to control each section based on programs stored in the ROM 2010 and the RAM 2020. The graphic controller 2075 acquires image data generated by the CPU 2000 or the like on a frame buffer disposed inside the RAM 2020 and displays the image data in the display apparatus 2080. Instead, the graphic controller 2075 may internally include the frame buffer storing the image data generated by the CPU 2000 or the like.

The input/output controller 2084 connects the communication interface 2030 serving as a relatively high velocity input/output apparatus, and the storage section 2040, and the Input/output section 2060 to the host controller 2082. The communication interface 2030 communicates with other apparatuses via a network. The storage section 2040 stores the programs and data used by the CPU 2000 housed in the computer 1900. The storage section 2040 is a non-volatile memory and may be a flash memory or hard disk, for example.

The Input/output section 2060 is connected to the connector 2095, sends and receives programs or data to and from the outside, and provides the programs or data to the storage section 2040 via the RAM 2020. The input/output section 2060 may communicate with the outside using a standardized connector and communication method, and in this case the input/output section 2060 may use a standard such as USB, IEEE 1394, HDMI (Registered Trademark), or Thunderbolt (Registered Trademark). The input/output section 2060 may communicate with the outside used a wireless communication standard such as Bluetooth (Registered Trademark).

Furthermore, the input/output controller 2084 is connected to the ROM 2010, and is also connected to the card slot 2050 and the input/output chip 2070 serving as a relatively high velocity input/output apparatus. The ROM 2010 stores a boot program performed when the computer 1900 starts up, a program relying on the hardware of the computer 1900, and the like. The card slot 2050 reads programs or data from a memory card 2090 and supplies the read information to the storage section 2040 via the RAM 2020. The input/output chip 2070 connects the card slot 2050 to the input/output controller 2084 along with each of the input/output apparatuses via, a parallel port, a serial port, a keyboard port, a mouse port, or the like.

The programs provided to the storage section 2040 via the RAM 2020 are provided by a user through the input/output section 2060 or by being stored in a storage medium, such as the memory card 2090. The programs are read from storage medium, installed in the storage section 2040 inside the computer 1900 via the RAM 2020, and performed by the CPU 2000.

The programs are installed in the computer 1900 and cause the computer 1900 to function as the acquiring section 120, the hold state judging section 130, the walking state judging section 140, the pattern storage section 150, the offset estimating section 160, and the parameter control section 170.

The information processes recorded in the programs are read by the computer 1900 to cause the computer 1900 to function as software and hardware described above, which are exemplified by the specific sections of the acquiring section 120, the hold state judging section 130, the walking state judging section 140, the pattern storage section 150, the offset estimating section 160, and the parameter control section 170. With these specific sections, a unique offset estimation apparatus 100 suitable for an intended use can be configured by realizing the calculations or computations appropriate for the intended use of the computer 1900 of the present embodiment.

For example, if there is communication between the computer 1900 and an external apparatus or the like, the CPU 2000 performs the communication program loaded in the RAM 2020, and provides the communication interface 2030 with communication processing instructions based on the content of the process recorded in the communication program. The communication interface 2030 is controlled by the CPU 2000 to read the transmission data stored in the RAM 2020, the storage section 2040, the memory card 2090, or a transmission buffer region provided to a storage apparatus or the like connected via the input/output section 2060, and send this transmission data to the network, and to write data received from the network onto a reception buffer area on the storage apparatus. In this way, the communication interface 2030 may transmit data to and from the storage apparatus through DMA (Direct Memory Access). As another possibility, the CPU 2000 may transmit the data by reading the data from the storage apparatus or communication interface 2030 that are the origins of the transmitted data, and writing the data onto the communication interface 2030 or the storage apparatus that are the transmission destinations.

The CPU 2000 may perform various processes on the data in the RAM 2020 by reading into the RAM 2020, through DMA transmission or the like, all or a necessary portion of the database or files stored in the external apparatus such as the storage section 2040, the input/output section 2060, or the memory card 2090. The CPU 2000 writes the processed data back to the external apparatus through DMA transmission or the like. In this process, the RAM 2020 is considered to be a section that temporarily stores the content of the external storage apparatus, and therefore the RAM 2020, the external apparatus, and the like in the present embodiment are referred to as a memory, a storage section, and a storage apparatus. The variety of information in the present embodiment, such as the variety of programs, data, tables, databases, and the like are stored on the storage apparatus to become the target of the information processing. The CPU 2000 can hold a portion of the RAM 2020 in a cache memory and read from or write to the cache memory. With such a configuration as well, the cache memory serves part of the function of the RAM 2020, and therefore the cache memory is also included with the RAM 2020, the memory, and/or the storage apparatus in the present invention, except when a distinction is made.

The CPU 2000 executes the various processes such as the computation, information processing, condition judgment, searching for/replacing information, and the like included in the present embodiment for the data read from the RAM 2020, as designated by the command sequence of the program, and writes the result back onto the RAM 2020. For example, when performing condition judgment, the CPU 2000 judges whether a variable of any type shown in the present embodiment fulfills a condition of being greater than, less than, no greater than, no less than, or equal to another variable or constant. If the condition is fulfilled, or unfulfilled, depending on the circumstances, the CPU 2000 branches into a different command sequence or acquires a subroutine.

The CPU 2000 can search for information stored in a file in the storage apparatus, the database, and the like. For example, if a plurality of entries associated respectively with a first type of value and a second type of value are stored in the storage apparatus, the CPU 2000 can search for entries fulfilling a condition designated by the first type of value from among the plurality of entries stored in the storage apparatus. The CPU 2000 can then obtain the second type of value associated with the first type of value fulfilling the predetermined condition by reading the second type of value stored at the same entry.

The programs and modules shown above may also be stored in an external storage medium. The memory card 2090, an optical storage medium such as a DVD, Bluray (Registered Trademark), or CD, a magneto-optical storage medium, a tape medium, a semiconductor memory such as an IC card, or the like can be used as the storage medium. Furthermore, a storage apparatus such as a hard disk or RAM that is provided with a server system connected to the Internet or a specialized communication network may be used to provide the programs to the computer 1900 via the network.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### [Explanation of Reference Numerals]

10: mobile device; 12: display section; 100: offset estimation apparatus; 110: sensor; 112: angular velocity sensor; 120: acquiring section; 130: hold state judging section; 140: walking state judging section; 150: pattern storage section; 160: offset estimating section; 170: parameter control section; 410: time interval; 420: segment; 422: average value; 424: threshold value; 1900: computer; 2000: CPU; 2010: ROM; 2020: RAM; 2030: communication interface; 2040: storage section; 2050: card slot; 2060: input/output section; 2070: input/output chip; 2075: graphic controller; 2080: display apparatus; 2082: host controller; 2084: input/output controller; 2090: memory card; 2095: connector

## Claims

1. An offset estimation apparatus comprising:
an acquiring section that acquires an output signal from an angular velocity sensor mounted in a mobile device;
a hold state judging section that judges a hold state of the mobile device; and
an offset estimating section that estimates an offset of the output signal of the angular velocity sensor according to a judgment result of the hold state judging section.

2. The offset estimation apparatus according to Claim 1, comprising:
a parameter control section that controls an estimation parameter of the offset estimating section according to the judgment result of the hold state judging section.

3. The offset estimation apparatus according to Claim 2, wherein
the acquiring section acquires an output signal corresponding to a plurality of rotational axes from the angular velocity sensor of the mobile device, and
the offset estimating section estimates the offset of the angular velocity sensor according to the judgment result of the hold state judging section and the output signal corresponding to the plurality of rotational axes.

4. The offset estimation apparatus according to Claim 3, wherein
the offset estimating section estimates the offset of the angular velocity sensor using the output signal of the angular velocity sensor under a condition corresponding to the estimation parameter.

5. The offset estimation apparatus according to any one of Claims 2 to 4, wherein
the parameter control section changes the estimation parameter of an angular velocity sensor corresponding to the judgment result of the hold state judging section, among a plurality of the sensor angular velocity sensors.

6. The offset estimation apparatus according to any one of Claims 2 to 5, wherein
the parameter control section changes the estimation parameter when the offset estimating section has performed an estimation of the offset of the angular velocity sensor.

7. The offset estimation apparatus according to any one of Claims 2 to 6, wherein
the parameter control section changes the estimation parameter when the judgment result of the hold state judging section has changed.

8. The offset estimation apparatus according to any one of Claims 2 to 7, wherein
the offset estimating section estimates the offset of the angular velocity sensor according to output of the angular velocity sensor corresponding to a judgement result that the mobile device is in a still state.

9. The offset estimation apparatus according to any one of Claims 2 to 8, further comprising:
a walking state judging section that judges a walking state of a holder of the mobile device, wherein
the offset estimating section switches whether the offset of the angular velocity sensor is estimated, according to the judgment result of the walking state judging section.

10. The offset estimation apparatus according to any one of Claims 2 to 9, wherein
the estimation parameter data includes threshold values for a minimum value and a maximum value of output fluctuation of the angular velocity sensor.

11. The offset estimation apparatus according to any one of Claims 2 to 10, the estimation parameter includes a prescribed number of pieces of data or a prescribed time interval used for one instance of the offset estimation in the output signal of the angular velocity sensor.

12. The offset estimation apparatus according to Claim 11, wherein the offset estimating section:
divides the prescribed time interval into a plurality of segments,
calculates a maximum value and a minimum value of data of the output signal of the angular velocity sensor in each of the plurality of segments, and
sets, as offset estimation candidates, pieces of data of the segments in which a difference between the maximum value and the minimum value is less than a predetermined first threshold value, among the plurality of segments.

13. The offset estimation apparatus according to Claim 12, wherein the offset estimating section further:
calculates a variance value of the data of the output signal of the angular velocity sensor in each of the plurality of segments, and
sets, as offset estimation candidates, pieces of data of the segments in which the variance value is less than a predetermined second threshold value, among the plurality of segments.

14. The offset estimation apparatus according to Claim 11, wherein the offset estimating section:
divides the prescribed time interval into a plurality of segments,
calculates a variance value of the data of the output signal of the angular velocity sensor in each of the plurality of segments, and
sets, as offset estimation candidates, pieces of data of the segments in which the variance value is less than a predetermined second threshold value, among the plurality of segments.

15. The offset estimation apparatus according to any one of Claims 12 to 14, wherein
the offset estimating section estimates the offset from the pieces of data that are offset candidates when the number of segments having pieces of data set as the offset candidates in the prescribed time interval is greater than or equal to a predetermined number.

16. The offset estimation apparatus according to Claim 15, wherein
the offset estimating section outputs, as the offset, an average value of the pieces of data set as the offset candidates in the prescribed time interval.

17. The offset estimation apparatus according to Claim 15 or 16, wherein
the parameter control section changes the predetermined number according to the judgment result of the hold state judging section.

18. The offset estimation apparatus according to any one of Claims 15 to 17, wherein
when there are offsets that have been estimated in the past before a certain offset, the offset estimating section further outputs the certain offset when an absolute value of a difference between the certain offset and an average value of the offsets estimated in the past is less than a predetermined third threshold value.

19. The offset estimation apparatus according to Claim 18, wherein
the offset estimating section does not output the certain offset when the absolute value of the difference between the certain offset and the average value of the offsets estimated in the past is greater than the predetermined third threshold value.

20. The offset estimation apparatus according to any one of Claims 15 to 17, wherein
when there are offsets that have been estimated in the past before a certain offset, the offset estimating section determines whether to output the certain offset based on variance of the offsets estimated in the past and variance of the certain offset.

21. The offset estimation apparatus according to any one of Claims 2 to 20, wherein
the parameter control section determines an evaluation value corresponding to the estimation parameter and gradually decreases the evaluation value according to passage of time.

22. The offset estimation apparatus according to Claim 21, wherein
the parameter control section determines the evaluation value according to the judgment result of the hold state judging section.

23. The offset estimation apparatus according to Claim 21 or 22, wherein
the offset estimating section estimates the offset of the angular velocity sensor on a condition that the evaluation value corresponding to the estimation parameter is increased by the parameter control section.

24. An offset estimation apparatus comprising:
an acquiring section that acquires an output signal from an angular velocity sensor mounted in a mobile device;
an offset estimating section that estimates an offset of the angular velocity sensor according to an output signal of the angular velocity sensor under conditions corresponding to an estimation parameter; and
a parameter control section that controls the estimation parameter when an offset of the angular velocity sensor has been estimated by the offset estimating section.

25. A method for estimating an offset of an angular velocity sensor mounted in a mobile device, comprising:
judging a hold state of the mobile device; and
estimating the offset of the angular velocity sensor according to a judgment result of the hold state of the mobile device.

26. A program that causes a computer to function as the offset estimation apparatus according to any one of Claims 1 to 24.
